Europäisches Patentamt

European Patent Office

Office européen des brevets

(11) Veröffentlichungsnummer : **0 173 877**
**B1**

(12) EUROPÄISCHE PATENTSCHRIFT

(45) Veröffentlichungstag der Patentschrift :
28.09.88

(51) Int. Cl.⁴ : **H 02 K   3/22**, H 02 K   3/24

(21) Anmeldenummer : 85109959.8

(22) Anmeldetag : 07.08.85

(54) Rotor einer elektrischen Maschine.

(30) Priorität : 27.08.84 CH 4082/84

(43) Veröffentlichungstag der Anmeldung :
12.03.86 Patentblatt 86/11

(45) Bekanntmachung des Hinweises auf die Patenterteilung : 28.09.88 Patentblatt 88/39

(84) Benannte Vertragsstaaten :
AT BE CH DE FR GB IT LI NL SE

(56) Entgegenhaltungen :
DE-B- 1 120 575
DE-B- 1 121 200
DE-B- 1 145 266
DE-B- 1 261 946
SIEMENS FORSCHUNGS- UND ENTWICKLUNGSBE-
RICHTE, Band 9, Nr. 2, 1980, Seiten 80-84, Springer-
Verlag, Berlin, DE; M. PLUSCHKE et al.: "Modellversuche zur strömungstechnischen Optimierung der
gasgekühlten Läufer von Turbogeneratoren"

(73) Patentinhaber : BBC Brown Boveri AG
Haselstrasse
CH-5401 Baden (CH)

(72) Erfinder : Schöllhorn, Karl, Dr.
Huunenweg 548
CH-5242 Birr (CH)

Beschreibung

Die Erfindung bezieht sich auf einen Rotor einer elektrisc Maschine mit direkt gasgekühlter Rotorwicklung gemäss dem Oberbegriff des Patentanspruchs 1.

Mit diesem Oberbegriff nimmt die Erfindung auf einen Stand der Technik Bezug wie er aus dem Aufsatz « Luftgekühlte Turbogeneratoren », erschienen in den « ETG-Fachberichten 3 — Kraftwerks-Generatoren » VDE-Verlag GmbH-Berlin 1977, S. 45-54, insbes. Bild 8 und 10 auf S. 52, hervorgeht.

Die direkt gasgekühlte Rotorwicklung besteht beim Bekannte aus übereinanderliegenden Einzelleitern mit ein oder zwei Längskanälen je Leiter. Das Kühlgas tritt beidseits unterhalb des Kopfes der Rotorwicklung ein und teilt sich am Beginn des Rotorballens in zwei Wege auf. Ein Teil des Gases durchströmt die Wickelkopfleiter und verlässt den Wickelkopfraum durch besondere Oeffnungen, die in der Polzone am Rotorballen angeordnet sind ; der Hauptteil der Kühlgasmenge tritt jedoch am Ballenanfang in die Hohlleiter ein, um in Ballenmitte radial auszuströmen. Die Gasauslasspartie ist in Bild 10 der vorgenannten Veröffentlichung dargestellt. Dieser Darstellung ist zu entnehmen, dass alle Leiter einer Lage in Rotormitte massive Leiterzwischenstücke aufweisen und die beiden Kühlkanäle jeder Leiterlage an der Nahtstelle zu den Leiterzwischenstücken seitlich eingeschnitten sind. Die Kühlkanäle münden in symmetrisch zur Leiterlängsrichtung angeordnete radial nach aussen verlaufende Kanäle. Diese radialen Kanäle sind durch Einfräsungen in den jeweils darüber liegenden massiven Leiterzwischenstücken und den Nutverschlusskeilen gebildet. Aufgrund der beidseitigen Gaszufuhr werden in Rotormitte in Abhängigkeit von der Lage der Leiter in der Nut unterschiedlich lange Leitabschnitte nicht so intensiv gekühlt. Hieraus resultiert eine zusätzliche Temperaturüberhöhung (hot spot), welche letztlich die Grenze der thermischen Belastbarkeit der Roorwicklung bestimmt.

Es ist Aufgabe der Erfindung einen Rotor einer elektrischen Maschine der eingangs genannten Gattung derart auszubilden, dass im Bereich der Gasaustritte in Maschinenmitte keine wesentlichen Temperaturüberhöhungen mehr auftreten.

Die Lösung dieser Aufgabe erfolgt erfindungsgemäss durch die in den Patentansprüchen gekennzeichnete Erfindung.

Auf diese Weise werden auch die Abschnitte der Rotorwicklung in der einen Gasantrittszonenhälfte von dem durch die Kühlkanäle strömenden Külgas in den danebenliegenden Leiterhälften gekühlt. Ein weiterer Vorteil besteht darin, dass sich die Durchbrüche/Bohrungen in den Nutverschlusskeilen auf eine grössere Länge verteilen und damit der Keil weniger geschwächt wird.

Dabei ist es besonders günstig, wenn sich die beiden Gasaustritte in Leiterlängsrichtung unmittelbar aneinander anschliessen.

Die Führung des Kühlgases durch Bohrungen im mittigen Bereich des Nutkeil hat den Vorteil, dass — Gegensatz zum Bekannten — die Keilflanken frei von Ausnehmungen und Einkerbungen gehalten werden können. Zudem sind die Keile einfacher zu fertigen.

Abgesehen von denjenigen radialen Kanälen, welche dem zuoberst in der Nut angeordneten Wicklungsleiter zugeordnet sind, verlaufen alle radialen Kanäle innerhalb der darüber liegenden Wicklungsleiter. Auf diese Weise tragen auch die durch diese Kanäle nach aussen strömenden Gase zur Kühlung der stromführenden Leiter im Bereich des Gasaustritts bei. Anders als beim Bekannten lässt sich somit auch in Bereich der Gasaustritte die direkte Kühlung realisieren.

Gemäss einer Weiterbildung der Erfindungsgegenstandes sind die radialen Kanäle als Isolierrohre ausgebildet, die sich radial nach aussen bis zum Nutkeil hin erstrecken. Die in den einen Kühlkanal mündenden Isolierrohre bilden dabei die Trennmittel für alle darüberliegenden Kühlkanäle und begrenzen sie in axialer Richtung. Der Innendurchmesser der Isolierrohre ist dabei vorzugsweise so gewählt, dass er gleich oder grösser ist als die Breite der Kühlkanäle. Die Isolierrohre können kreisrunde oder rechteckige Querschnittsform aufweisen, wobei letztere die kleinstmögliche Einengung des Ausströmquerschnitts im Gasaustritt ermöglichen.

Bei einer anderen Weiterbildung der Erfindung werden die radialen Kanäle durch Bohrungen bzw. Durchbrüche in den Wicklungsleitern gebildet, wobei die Trennmittel entweder als den gesamten Querschnitt der Kühlkanäle ausfüllende Verschlussstücke oder durch vollständiges Einschnüren der Kühlkanäle neben den Bohrungen ausgebildet sind.

Beide Möglichkeiten eignen sich insbesondere für Wicklungsleiter, die aus zwei Profilleitern mit E-förmigem Querschnitt zusammengesetzt sind. Bei derartigen Leitern lassen sich die Trennmittel besonders einfach an- bzw. einbringen.

Die Erfindung wird nachstehend anhand von in der Zeichnung dargestellten Ausführungsbeispielen näher erläutert.

In der Zeichnung zeigt :

Fig. 1 einene schematische Darstellung zur Erläuterung des der Erfindung zugrundeliegenden Prinzips des axial versetzten Gasaustritts,

Fig. 2 eine schematische Darstellung der Gasaustrittspartie in einer Hälfte des Rotorleiterbündels,

Fig. 3 eine perspektivische Darstellung eines Teils eines Rotors mit direkt gekühlter Rotorwicklung und versetzten Gasaustritten,

Fig. 4 eine Abwandlung der Anordnung nach Fig. 2 mit Isolierrohren als radiale Kanäle.

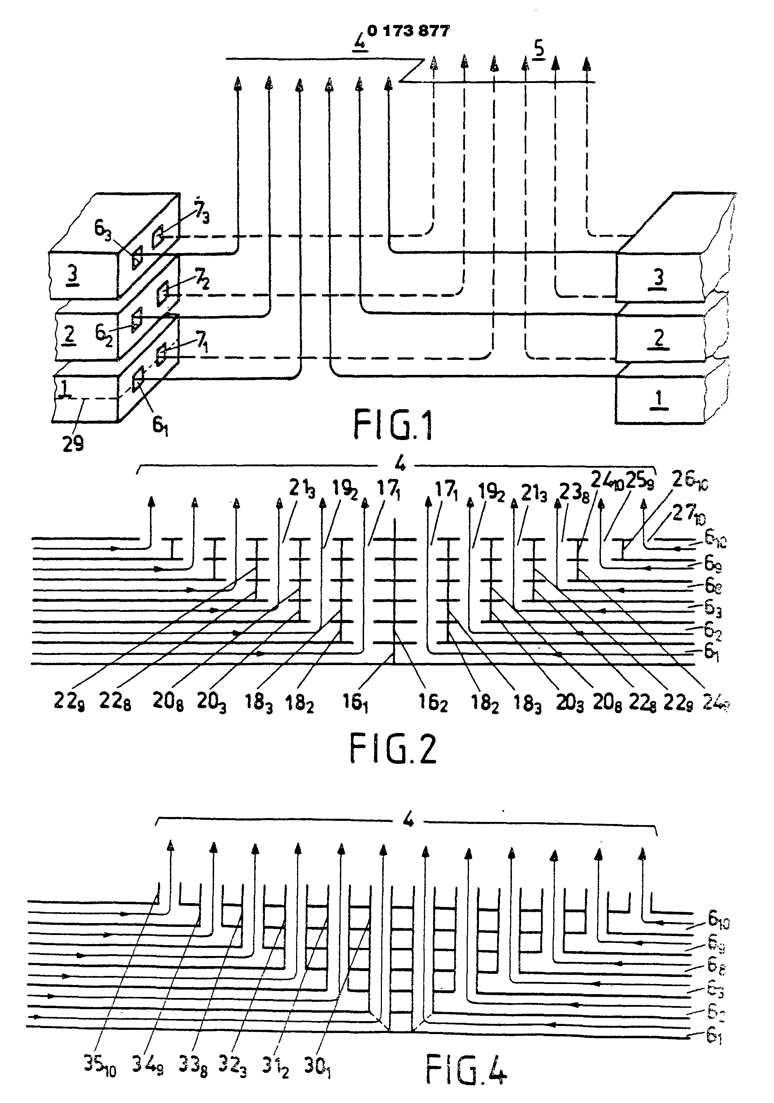

In Fig. 1 sind drei Rotorwicklungsleiter 1, 2 und 3 dargestellt, die aus Gründen übersichtlicher Darstellung in der Rotormitte in der Zone des Gasaustritts 4 und 5 unterbrochen wurden. Die Leiter 1, 2, 3 weisen je zwei Längskanäle $6_1$, $7_1$, $6_2$, $7_2$, $6_3$, $7_3$ auf, die an die beiden Rotorenden führen. Die Strömung des Kühlgases durch die Kanäle 6 ist durch durchgehende Linien und Pfeile, diejenige durch die Kanäle 7 durch strichlierte Linien und Pfeile veranschaulicht. Die Gasaustritte 4 und 5 sind in Leiterlängsrichtung so versetzt, dass beide Gasaustritte unmittelbar aufeinanderfolgen. Man erkennt deutlich, dass im Bereich des Gasaustritts 4 die einen Leiterhälften direkt vom Kühlgas beaufschlagt werden und auf diese Weise die anderen Hälften mitgekühlt werden. Gleiches gilt umgekehrt für den Bereich des Gasaustritts 5.

In der schematischen Darstellung der Fig. 2 sind zur Verdeutlichung nur die Kühlkanäle $6_i$ (i = 1, 2, 3, 8, 9, 10) der Rotorwicklungsleiter 1, 2, 3, 8, 9, 10 dargestellt. In der Mitte des Gasaustritts 4 sind in allen Kühlkanälen erste Trennwände $16_1$, $16_2$ etc. vorgesehen. Beidseits dieser in einer Radialebene liegenden Trennwände $16_i$ sind zwei erste radiale Kanäle $17_1$ vorgesehen, welche durch die Ausnehmungen in den Wicklungsleitern 2, 3, 8, 9 und 10 bis hin zum Kühlkanal $6_1$ im untersten Wicklungsleiter 1 führen. Diese radialen Kanäle sind durch zweite Trennwände $18_2$, $18_3$, ... gegenüber den restlichen Kühlkanälen $6_2$, $6_3$, ... verschlossen. Die zweiten Trennwände $18_2$, $18_3$, ... bilden wiederum die Begrenzung für zwei zweite radiale Kühlkanäle $19_2$, die mit den Kühlkanälen $6_2$ im zweiten Wicklungsleiter 2 in freier Verbindung stehen. Gegen die Rotorenden hin sind die zweiten radialen Kühlkanäle $18_2$ durch dritte Trennwände $20_3$, $20_8$, ... verschlossen.

Die dritten Trennwände $20_3$, $20_8$, ... bilden die Begrenzung für zwei dritte radiale Kanäle $21_3$, die mit den Kühlkanälen $6_3$ im dritten Wicklungsleiter 3 verbunden sind. Gegen die Rotorenden hin sind die dritten radialen Kühlkanäle $21_3$ durch vierte Trennwände $22_8$, $22_9$, $22_{10}$ verschlossen.

Dies setzt sich sinngemäss fort über vierte radiale Kühlkanäle $23_8$, die durch die vierten Trennwände $22_8$, $22_9$, $22_{10}$ sowie fünfte Trennwände $24_9$, $24_{10}$ begrenzt werden, welche mit dem Kühlkanal $6_8$ im vierten Wicklungsleiter 8 in Verbindung stehen, über fünfte radiale Kanäle $25_9$, die durch die fünften Trennwände $24_9$, $24_{10}$ sowie sechste Trennwände $26_{10}$ begrenzt sind, und schliesslich den durch die Trennwände $26_{10}$ abgeschlossenen Kühlkanal $6_{10}$ im sechsten Wicklungsleiter 10, der unmittelbar in einen sechsten radialen Kanal $27_{10}$ mündet.

Alle radialen Kühlkanäle $17_1$, $19_2$, $21_3$, $23_8$, $25_9$ und $27_{10}$ durchsetzen ferner einen in Fig. 2 nicht dargestellten Nutkeil samt Keilunterlage und münden in den Luftspalt der elektrischen Maschine.

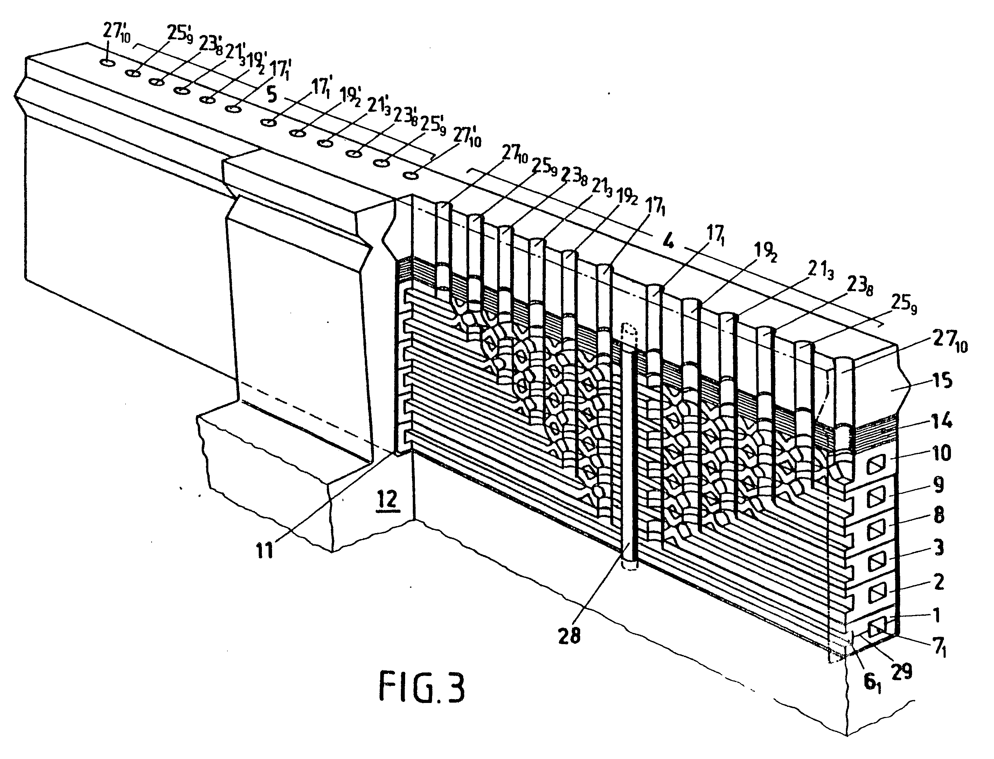

Die vorbeschriebene Kühlgasführung lässt sich auf überraschend einfache und wirtschaftliche Weise bei Rotoren mit Hohlleitern mit Rechteckprofil und rechteckförmigen Kühlkanalquerschnitt realisieren, was nachfolgend anhand von Fig. 3 näher erläutert werden soll.

In der perspektivischen Darstellung des rotormittigen Bereichs eines Rotors eines Turbogenerators nach Fig. 3 sind in Nuten 11 mit Rechteckquerschnitt im Rotorballen 12 sechs Rotorwicklungsleiter 1, 2, 3, 8, 9, 10 übereinander angeordnet. Jeder Leiter ist mit einer Isolation 13 versehen. Das Leiterbündel ist unter Zwischenschaltung einer Keilunterlage 14 aus Schichtpressstoff mittels eines Nutkeils 15 in der Rotornut 11 in bekannter Weise fixiert. Jeder Wicklungsleiter 1, 2, 3, 8, 9, 10 weist zwei nebeneinanderliegende Kühlkanäle $6_i$, $7_i$ (i = 1, 2, 3, 8, 9, 10) mit rechteckigem Querschnitt auf.

Die Gasaustrittspartie der einen Leiterbündelhälfte ist mit 4, die der anderen Leiterbündelhälfte ist mit 5 bezeichnet.

Ein Bolzen 28 aus Isoliermaterial mit einem Durchmesser grösser als die Breite der Kühlkanäle $6_i$ ist durch eine alle Wicklungsleiter 1, 2, 3, 8, 9, 10 durchsetzende Bohrung geführt. Dieser Bolzen 28 übernimmt die Funktion der ersten Trennwände $16_i$ der Fig. 2.

In der gezeigten Form dient der Bolzen 28 als Montagehilfsmittel und zur Zentrierung der Wicklungsleiter in sich während des Betriebes der Maschine. Er kann jedoch auch zur Zentrierung des Leiterverbandes in Axialrichtung herangezogen werden, wenn — wie in Fig. 3 strichliert angedeutet — der Bolzen zum einen in eine Bohrung im Nutgrund und zum anderen in eine entsprechende Bohrung im Nutkeil 15 hineinreicht.

Die ersten radialen Kanäle $17_1$ sind durch miteinander fluchtende Bohrungen in den Leitern 1, 2, 3, 8, 9 und 10 sowie in der Keilunterlage 14 und dem Nutkeil 15 gebildet, wobei die Bohrung im Leiter 1 lediglich den Kühlkanal $6_1$ anschneidet.

Die zweiten Trennwände $18_i$ sind durch vollständiges Einschnüren der Kühlkanäle $6_2$, $6_3$, $6_8$, $6_9$, $6_{10}$ unmittelbar neben den genannten Bohrungen in den Leitern 2, 3, 8, 9 und 10 gebildet. Dieses Einschnüren kann z. B. mit einem Stanzwerkzeug erfolgen, womit die gegenüberliegenden Wände des Kühlkanals lokal so stark belastet werden, dass sie in diesem Bereich nach innen abgeschert werden und die so entstehenden Sicken sich über die gesamte Kühlkanalbreite berühren und den Kühlkanal absperren.

An diese Einschnürungen schliessen sich die radialen Kühlkanäle $19_2$ an, welche durch eine die Leiter 2, 3, 8, 9, 10, die Keilunterlage 14 und den Nutkeil 15 durchsetzende Bohrung gebildet sind. Auch hier schneidet diese Bohrung den Kühlkanal $6_2$ im Leiter 2 nur an, ohne den Leiter vollständig zu durchdringen. Die dritten Trennwände $20_i$ sind wiederum durch vollständiges Einschnüren der Kühlkanäle $6_3$, $6_8$, $6_9$ und $6_{10}$ unmittelbar neben den Bohrungen in den Leitern 3, 8, 9 und 10 gebildet.

Einschnürungen als Trennwände und Durchgangsbohrungen als radiale Kanäle folgen sich analog zu der in Fig. 2 beschriebenen Anordnung.

Die Gasaustrittspartie 5 weist den selben Aufbau wie die soeben beschriebene auf; die entsprechenden radialen Kanäle sind durch den Index « ' » gekennzeichnet. Beide Kanalgruppen folgen sich unmittelbar.

Neben der einstückigen Ausführung können die Rotorwicklungsleiter auch aus Leitermaterial mit E-Profil bestehen, wie es in Fig. 1 und 3 beim Leiter 1 durch die Trennfuge 29 veranschaulicht ist. Diese Ausbildung der Wicklungsleiter weist den Vorteil auf, dass die Bohrungen in ihnen und damit die Querschnittsform der radialen Kanäle $17_1$, $19_2$, ... freier gewählt werden kann. So lassen sich im Teilleiter mit E-Querschnitt durch Stanzen rechteckige Bohrungen wirtschaftlich herstellen. Auch vereinfacht sich bei Teilleitern mit E-Querschnitt das Einbringen der als Trennwände dienenden Sicken bzw. Einschnürungen.

Die Trennwände können auch dadurch gebildet werden, dass mit einem geeigneten Stanzwerkzeug von der Seite oder von der Leiteroberseite oder -unterseite her ein Teil der Kühlkanalwandung in Form eines Lappens abgeschert und dieser Lappen nach innen abgebogen wird, bis er an der gegenüberliegenden Kühlkanalwandung anliegt.

Eine weitere Möglichkeit zur Schaffung von Trennwänden besteht z. B. im Einschieben von Füllstücken von den freien Enden der Wicklungsleiter her bis zum Einbauort und anschliessendem Fixieren, z. B. durch plastische Verformung mit einem Körnerschlag. Diese Füllstücke können auch aus einem verformbaren und später aushärtendem Material bestehen, z. B. aus kunstharzgetränkten Propfen.

Weiterhin ist es möglich, die Wicklungsleiter an der Trennstelle seitlich oder von oben oder von unten her zu schlitzen und in den Schlitz ein Trennstück einzusetzen, das den Kühlkanal abschliesst.

Dabei liegt es auf der Hand, dass die vorbeschriebenen Alternativen sowohl bei einstückigen Wicklungsleitern als auch bei zweiteiligen Leitern mit E-Profil verwendet werden können, da diese Manipulationen bereits bei der Wicklungsleiterherstellung ausserhalb des Rotors durchgeführt werden.

Bei einstückigen Wicklungsleitern besteht eine weitere Möglichkeit, die Trennwände dadurch herzustellen, dass seitlich Sacklochbohrungen eingebracht werden, in welche Bolzen eingesteckt oder eingeschraubt werden, welche den gesamten Kühlkanalquerschnitt ausfüllen.

Eine weitere Ausführungsform für den Gasaustritt 4 ist in Fig. 4 schematisch dargestellt. Die Trennung der Kühlkanäle in axialer Richtung und die radiale Kanalbildung ist hier in einem einzigen Bauteil vereinigt :

Analog zu Fig. 2 und 3 ist das Leiterbündel mit einer Reihe von Durchgangsbohrungen, die — in der Mitte des Gasaustritts 4 beginnend — nacheinander alle übereinanderliegenden Wicklungsleiter mit dem Rotoräusseren (Luftspalt) verbinden. In diese Bohrungen sind in ihrer Länge angepasste Isolierrohre $30_1$, $31_2$, $32_3$, $33_8$, $34_9$, $35_{10}$ eingesetzt.

Die Isolierrohre $30_1$ reichen bis zum Kühlkanal $6_1$. Ihre abgeschrägten Enden trennen den Kühlkanal $6_1$ beidseits der Mitte des Gasaustritts 4. Die nächsten Isolierrohre $31_2$ münden in den Kühlkanal $6_2$, wobei das Isolierrohr $30_1$ die beiden Hälften des Kühlkanals $6_2$ zur Mitte hin abschliessen. Dies wiederholt sich sinngemäss bis zum Isolierrohr $35_{10}$.

Die die radialen Kanäle bildenden Isolierrohre $30_1$, $31_2$, ... weisen einen Innendurchmesser auf, der etwa der Breite der Kühlkanäle $6_1$, $6_2$, ... entspricht. Die Wicklungsleiter 1, 2, ... sind bei dieser Ausführung vorteilhaft aus Teilleitern mit E-Querschnitt aufgebaut. Auf diese Weise kann die Querschnittsform der Bohrungen leicht dem gewünschten Querschnitt der Isolierrohre, z. B. Rechteckquerschnitt, angepasst werden.

Die Isolierrohre $30_1$, $31_2$, ... durchdringen vorzugsweise die Keilunterlage 14 und reichen im Grenzfall bis an den Nutkeil 15, der wie in Fig. 3 mit den Isolierrohren fluchtende Bohrungen aufweist, wobei sich die Isolierrohre am Nutkeil abstützen.

Der Gasaustritt 5 ist in der gleichen Weise aufgebaut. Die Gasaustritte 4, 5, sind ebenfalls in Leiterlängsrichtung gegeneinander versetzt.

Durch die erfindungsgemässe axiale Versetzung der Gasaustrittspartien ergeben sich folgende Vorteile.

— Die nicht direkt gekühlten Abschnitte der Rotorleiter werden vom Gasstrom in der benachbarten Leiterhälfte mitgekühlt.

— Darüber hinaus tragen auch die Gasströme in den radialen Kühlkanälen mit zur direkten Kühlung der Leiterabschnitte in der Austrittspartie bei, da insbesondere bei Fig. 3 praktisch keine toten Zonen (Raum zwischen den Einschnürungen und Bohrungen) vorhanden sind.

— Die Ausbildung gemäss Fig. 4 mit Isolierrohren als radiale Kanäle lässt sich überhaupt erst mit axial versetzten Gasaustritten realisieren, da sonst die toten Zonen eine übermässige Temperaturüberhöhung zur Folge haben könnten.

— Der Nutverschlusskeil wird weit weniger geschwächt, da sich die Auslässe der radialen Kanäle auf eine gegenüber den bekannten doppelt so grossen axialen Länge verteilen und ausserhalb der Keilauflagen an den Nutzähnen liegen.

— Die Rotorwicklungsleiter können aus Profilleiter mit E-Profil hergestellt werden, was deren Handhabung und Bearbeitung vereinfacht.

**Patentansprüche**

1. Rotor einer elektrischen Maschine mit direkt gekühlter Rotorwicklung

— mit in Nuten (11) übereinander angeordneten und mit Nutkeilen darin befestigten, ein Leiterbündel bildenden Wicklungsleitern (1, 2, 3, 8, 9, 10), mit zwei nebeneinander in Leiterlängsrichtung verlaufenden Kühlkanälen ($6_i$, $7_i$ (i = 1, 2, 3, 8, 9, 10)),

— mit je Nut zwei in Rotorumfangsrichtung gegeneinander versetzten Gasaustrittszonen (4, 5) im mittleren Abschnitt des Rotors, in welchem Abschnitt die Kühlkanäle durch Trennmittel (16, 18, 20, 22, 24, 26) unterbrochen sind,

— an den Unterbrechungsstellen steht jede Kühlkanalhälfte mit je einem annähernd radial verlaufenden Kanal (17, 19, 21, 23, 25, 27) in Verbindung, der an der Rotoroberfläche endet, wobei in jeder Gasaustrittszone (4, 5) die den in der Nut (11) radial innen liegenden axialen Kanälen ($6_1$ ; $7_1$) zugeordneten radialen Kanäle ($17_1$) in Zonenmitte liegen und die den jeweils darüber liegenden axialen Kanälen zugeordneten radialen Kanäle sich in Nutlängsrichtung den besagten radialen Kanälen ($6_1$ ; $7_1$) in Zonenmitte beidseits anschliessen,
dadurch gekennzeichnet, dass
— die Gasaustrittszonen (4, 5) einer Nut in Leiterlängsrichtung gegeneinander versetzt sind,
— und die radialen Kanäle (17, 19, 21, 23, 25, 27) in die Nutkeile (15) annähernd radial durchsetzende Bohrungen münden,
— beide Gasaustrittszonen (4, 5) sich unter Vermeidung einer Überlappung in Nutlängsrichtung folgen.

2. Rotor nach Anspruch 1, dadurch gekennzeichnet, dass sich die Gasaustrittszonen (4, 5) in Leiterlängsrichtung unmittelbar folgen.

3. Rotor nach Anspruch 1 oder 2, dadurch gekennzeichnet, dass die Bohrungen im Nutkeil (15) im mittigen Bereich des Nutkeils (15) vorgesehen sind.

4. Rotor nach einem der Ansprüche 1 bis 3, dadurch gekennzeichnet, dass die radialen Kanäle — ausgenommen der radiale Kanal ($6_{10}$), der mit dem zuoberst in der Nut liegenden Wicklungsleiter (10) verbunden sind — vollständig innerhalb der darüberliegenden Wicklungsleiter verlaufen.

5. Rotor nach Anspruch 4, dadurch gekennzeichnet, dass die radialen Kanäle durch Isolierrohre ($30_1$, $31_2$, $32_3$, $33_8$, $34_9$, $35_{10}$) gebildet sind, die nach aussen hin bis zum Nutkeil (15) reichen, wobei die Isolierrohrwandungen die jeweils darüberliegenden Kühlkanäle in axialer Richtung begrenzen und die Trennmittel bilden (Fig. 4).

6. Rotor nach Anspruch 4, dadurch gekennzeichnet, dass die radialen Kanäle ($17_1$, $19_2$, ...) durch Bohrungen bzw. Durchbrüche in den Wicklungsleitern gebildet sind und dass die Trennmitell als den gesamten Querschnitt der Kühlkanäle ($6_i$, $7_i$ (i = 1, 2, 3, 8, 9, 10) ausfüllende Verschlussstücke ausgebildet sind.

7. Rotor nach Anspruch 4, dadurch gekennzeichnet, dass die radialen Kanäle durch Bohrungen bzw. Durchbrüche in den Wicklungsleitern gebildet sind und dass die Trennmittel durch vollständiges Einschnüren der Kühlkanäle unmittelbar neben den genannten Bohrungen bzw. Durchbrüchen gebildet sind, welche die Kühlkanäle in axialer Richtung begrenzen.

**Claims**

1. Rotor of an electrical machine with directly cooled rotor winding
— having winding conductors (1, 2, 3, 8, 9, 10) forming a conductor bundle and located one above the other in grooves (11) and fastened therein by means of groove wedges, the winding conductors having two adjacent cooling ducts ($6_i$, $7_i$ (i = 1, 2, 3, 8, 9, 10)) running in the longitudinal direction of the conductors
— having for each groove two gas outlet zones (4, 5) in the central section of the rotor and offset relative to one another in the rotor peripheral direction, in which section the cooling ducts are interrupted by separating means (16, 18, 20, 22, 24, 26),
— at each interruption point, each half cooling duct is in connection with one each approximately radially extending duct (17, 19, 21, 23, 25, 27) which ends at the upper surface of the rotor, in each gas outlet zone (4, 5), the radial ducts ($17_1$) allocated to the radially inner lying axial ducts ($6_1$ ; $7_1$) in the groove (11) lying in zone centre and the radial ducts allocated to the axial ducts respectively lying above adjoining in the groove longitudinal direction on both sides of the said radial ducts ($6_1$ ; $7_1$) in zone centre,
characterised in that
— the gas outlet zones (4, 5) of a groove are offset relative to one another in the conductor longitudinal direction
— and the radial ducts (17, 19, 21, 23, 25, 27) emerge into holes passing through the groove wedges (15) approximately radially, both gas outlet zones (4, 5) following in the groove longitudinal direction, with avoidance of an overlap.

2. Rotor according to Claim 1, characterised in that the gas outlet zones (4, 5) follow directly in the conductor longitudinal direction.

3. Rotor according to Claim 1 or 2, characterised in that the holes in the groove wedge (15) are provided in the central region of the groove wedge (15).

4. Rotor according to one of the Claims 1 to 3, characterised in that the radial ducts — with the exception of the radial duct ($6_{10}$) which is connected to the uppermost winding conductor (10) located in the groove — extend completely within the winding conductors located above them.

5. Rotor according to Claim 4, characterised in that the radial ducts are formed by insulating tubes ($30_1$, $31_2$, $32_3$, $33_8$, $34_9$, $35_{10}$) which extend outwards as far as the groove wedge (15), the insulating tube walls limiting the cooling ducts located above in the axial direction and forming the separating means (Figure 4).

6. Rotor according to Claim 4, characterised in that the radial ducts ($17_1$, $19_2$, ...) are formed by holes or penetrations in the winding conductors and that the separating means are formed as the closure pieces filling the total cross-section of the cooling ducts ($6_i$, $7_i$ (i = 1, 2, 3, 8, 9, 10)).

7. Rotor according to Claim 4, characterised in that the radial ducts are formed by holes or penetrations in the winding conductors and that the separating means are formed by complete restriction of the cooling ducts directly adjacent to the holes or penetrations mentioned, which limit the cooling ducts in the axial direction.

**Revendications**

1. Rotor d'une machine électrique à enroulement de rotor refroidi directement,

— comportant des conducteurs d'enroulement (1, 2, 3, 8, 9, 10) formant un paquet de conducteurs superposés dans des rainures (11) dans lesquelles ils sont fixés au moyen de cales de rainures et pourvus de deux canaux de refroidissement ($6_i$, $7_i$ (i = 1, 2, 3, 8, 9, 10)), disposés l'un à côté de l'autre et s'étendant dans le sens longitudinal des conducteurs ;

— comportant, pour chaque rainure, deux zones de sortie de gaz (4, 5) décalées l'une par rapport à l'autre dans la section médiane du rotor dans laquelle les canaux de refroidissement sont interrompus par des moyens de séparation (16, 18, 20, 22, 24, 26) ;

— chaque moitié de canal de refroidissement communiquant aux endroits d'interruption chaque fois avec un canal s'étendant à peu près radialement (17, 19, 21, 23, 25, 27) qui se termine à la surface du rotor, étant entendu que, dans chaque zone de sortie de gaz (4, 5), les canaux radiaux ($17_1$) associés aux canaux axiaux ($6_1$ ; $7_1$) situés radialement vers l'intérieur dans la rainure (11) sont disposés dans le milieu de la zone et que les canaux radiaux associés aux canaux axiaux qui sont chaque fois surjacents se raccordent dans le sens longitudinal de la rainure au milieu de la zone des deux côtés auxdits canaux ($6_1$ ; $7_1$),

caractérisé en ce que

— les zones de sortie de gaz (4, 5) d'une rainure sont décalées l'une de l'autre dans le sens longitudinal des conducteurs ;

— les canaux radiaux (17, 19, 21, 23, 25, 27) débouchent dans des forures traversant à peu près radialement les cales de rainures (15) ;

— et les deux zones de sortie de gaz (4, 5) se suivent dans le sens longitudinal de la rainure en évitant un chevauchement.

2. Rotor suivant la revendication 1, caractérisé en ce que les zones de sortie de gaz (4, 5) se suivent immédiatement dans le sens longitudinal des conducteurs.

3. Rotor suivant la revendication 1 ou 2, caractérisé en ce que les forures de la cale de rainure (15) sont prévues dans la région médiane de cette cale de rainure (15).

4. Rotor suivant l'une quelconque des revendications 1 à 3, caractérisé en ce que les canaux radiaux, à l'exception du canal radial ($6_{10}$) qui communique avec le conducteur d'enroulement (10) situé au plus haut niveau dans la rainure, s'étendent entièrement à l'intérieur du conducteur d'enroulement surjacent.

5. Rotor suivant la revendication 4, caractérisé en ce que les canaux radiaux sont formés par des tubes isolants ($30_1$, $31_2$, $32_3$, $33_8$, $34_9$, $35_{10}$), qui s'étendent vers l'extérieur jusqu'à la cale de rainure (15), les parois de tubes isolants délimitant chaque fois, dans le sens axial, les canaux de refroidissement surjacents et formant les moyens de séparation (Fig. 4).

6. Rotor suivant la revendication 4, caractérisé en ce que les canaux radiaux ($17_1$, $19_2$, ...) sont formés par des forures ou des percements dans les conducteurs d'enroulement et les moyens de séparation sont formés par des pièces de remplissage remplissant toute la section des canaux de refroidissement ($6_i$, $7_i$ (i = 1, 2, 3, 8, 9, 10)).

7. Rotor suivant la revendication 4, caractérisé en ce que les canaux radiaux sont formés par des forures ou des percements dans les conducteurs d'enroulement et les moyens de séparation sont formés par pincement total des canaux de refroidissement immédiatement à côté des forures ou percements, délimitant les canaux de refroidissement dans le sens axial.

**FIG.1**

**FIG.2**

**FIG.4**

FIG. 3